# EUROPEAN PATENT SPECIFICATION

(11) **EP 3 551 578 B1**
(45) Date of publication and mention of the grant of the patent: **28.07.2021**
(21) Application number: 17818488.3
(22) Date of filing: 08.12.2017
(51) Int. Cl.: C01B 17/88, B01D 3/16, B01D 1/14, B01D 3/34

(54) **A PROCESS FOR INCREASING THE CONCENTRATION OF SULFURIC ACID AND EQUIPMENT FOR USE IN THE PROCESS**
VERFAHREN ZUR ERHÖHUNG DER KONZENTRATION VON SCHWEFELSÄURE UND VORRICHTUNG ZUR VERWENDUNG IN DEM VERFAHREN
PROCÉDÉ POUR AUGMENTER LA CONCENTRATION D'ACIDE SULFURIQUE ET ÉQUIPEMENT DESTINÉ À ÊTRE UTILISÉ DANS LE PROCÉDÉ

(30) Priority: 12.12.2016 DK PA201600760
(43) Date of publication of application: 16.10.2019
(73) Proprietor: Haldor Topsøe A/S, 2800 Kgs. Lyngby (DK)
(72) Inventor: MØLLERHØJ, Martin, 3460 Birkerød (DK)
(74) Representative: Haldor Topsøe A/S
(86) International application number: PCT/EP2017/082042
(87) International publication number: WO 2018/108739

(56) References cited:
- EP-A1- 0 010 899
- EP-A2- 2 272 796
- US-A- 5 118 490
- US-A- 5 275 701

## Description

The present invention relates to a process for increasing the concentration of already concentrated sulfuric acid and equipment for use in the process. This increase in concentration is useful in connection with the purification of sulfur-containing flue gases and off-gases, where sulfur is present as sulfur trioxide and is removed as acid, which is formed by condensation of the sulfur trioxide/water containing gas. This process is called the wet gas sulfuric acid (WSA) process.

Sulfuric acid (H₂SO₄) is an important commodity chemical, the production of which exceeds 200 million t/year. It is primarily used for fertilizer production, but it is also used i.a. in the manufacture of pigments, in batteries, in the metallurgical industry and in refining industry.

Many applications of sulfuric acid require an acid concentration of 93 wt% H₂SO₄, where the remaining 7 wt% is water.

With regard to storage, transportation and sales value, a concentration of 98 wt% is desired or even required by the buyer and/or the freight company. This means that the demand for production of sulfuric acid with a higher acid concentration in sulfuric acid plants has increased.

In so-called wet type sulfuric acid plants, where the process gas also contains water, it is often difficult to obtain a product acid concentration of 98 wt%. This is due to the strong hygroscopic properties of sulfuric acid and the presence of an azeotrope at around 98.6 wt% H₂SO₄.

In an attempt to increase the sulfuric acid concentration, so-called stand-alone sulfuric acid concentration plants have been developed.

In many of the processes for increasing the sulfuric acid concentration, cold dilute acid is fed to the plant, where it is indirectly heated to a temperature very close to the boiling point of the acid. A distillation process is taking place, i.e. the system is only H₂SO₄ and H₂O. To reach an acid concentration of above 98.0 wt%, more than one distillation step is required, and at least the last distillation step is operated under vacuum in order to lower the boiling temperature of the acid. The Plinke process is an example of the most widely used stand-alone sulfuric acid concentrating technology.

Some directly fired H₂SO₄ concentration units exist, in which dilute sulfuric acid is contacted with hot (∼600°C) process gas from combustion of some sort of fuel. These units have the disadvantage of producing large volumes of process gas with a high concentration of sulfuric acid vapor, and the product acid concentration rarely exceeds 93 wt%. The Submerged Combustion process and the Chemico Direct Fired Drum concentrator are examples of this technology.

Another solution, which can be used to increase the concentration of the product acid from a wet-type sulfuric acid plant, is to include a so-called Integrated Sulfuric Acid Concentrator (ISAC) in the design of the sulfuric acid plant. The ISAC can be mounted at the liquid outlet of the sulfuric acid condenser, in which sulfuric acid condenses from the gas phase by direct or indirect cooling of the process gas containing sulfuric acid and water vapor.

"Integrated" means that the liquid inlet of the ISAC is in fluid communication with the liquid outlet of the sulfuric acid condenser, and the hot air leaving the ISAC column is in contact with the gas inlet to the sulfuric acid condenser.

In the ISAC, the hot already concentrated sulfuric acid from the condenser is contacted with hot dried air, flowing in counter-current to the acid, thereby forcing water and a little sulfuric acid to evaporate from the sulfuric acid, thus increasing the sulfuric acid concentration at the outlet of the ISAC. The dried air leaves at the top of the ISAC and enters at the bottom of the sulfuric acid condenser, where the sulfuric acid vapors are condensed, while the acid is returned to the top of the ISAC. This process is described in further detail in EP 0 844 211 and US 2011/0311433, both belonging to the Applicant.

However, although elegant, the ISAC unit cannot always increase the sulfuric acid concentration to the desired level of 98 wt%. According to US 2011/0311433, if the concentration of the sulfuric acid entering the top of the ISAC is 93.0 wt%, the concentration at the outlet will be ∼96.3 wt%. The sulfuric acid concentration capacity is limited by the allowable flow of hot dried air which, in turn, is limited by the flow of the acid entering the ISAC.

US 5118490 A discloses a process for producing sulfuric acid from an off-gas stream containing SO₂, by means of treating a wet gas having a molar ratio of SO₃/H₂O > 0.95.

EP 2272796 A2 discloses a process for producing concentrated sulfuric acid from an off-gas stream in a wet gas sulfuric acid (WSA) process.

The present invention is an improvement of the ISAC technology described above, in which the sulfuric acid concentrating capacity is significantly increased compared to the present technology. Furthermore, the flexibility in operation is improved and the energy requirement is reduced. More specifically, the present invention relates to a process for increasing the concentration of already concentrated, i.e. 90-98 wt% sulfuric acid, said process comprising the step of stripping water from the sulfuric acid by contacting it with a stripping media selected from air and process gas in a sulfuric acid concentrator column to increase the concentration of the acid leaving the column, wherein a fraction of the acid, which is leaving the column, is recycled back to a position upstream the column through an acid recirculation loop.

The air used for stripping can be ambient air or dried air. Preferably, the air used for stripping has a water concentration below 4 vol%, most preferably below 0.8 vol%.

When process gas is used for stripping, it preferably has a concentration of H₂O (unhydrated) minus the concentration of SO₃ (unhydrated) below 4.5 vol%,preferably below 1 vol%.

The stripping media may have a temperature of 100-700°C, preferably 300-700°C and most preferably 350-600°C.

The acid is optionally heated by heat exchange during its passage through the acid recirculation loop. It is preferred that the acid is heated to a temperature of 200-270°C, preferably 230-260 °C, during its passage through the acid recirculation loop.

Preferably the already concentrated sulfuric acid is a sulfuric acid condenser effluent. Preferably also, the concentration of the already concentrated sulfuric acid is 70-98 wt%, preferably 90-98 wt%.

The product acid concentration will be in the range between the inlet concentration and ∼98.6 wt%, which represents the azeotrope concentration, i.e. the maximum obtainable concentration. With the present invention, adjustment of the acid recycle ratio, acid temperature, flow and temperature of the stripping media allows for a flexible and robust operation of the unit, allowing to produce 98.0 wt% acid, independent of the acid concentration from the sulfuric acid condenser.

Preferably, the concentration of sulfuric acid product from the concentration column is 95-98.6 wt%, preferably 97-98.6 wt%
Preferably, the recirculated acid is fed directly to the liquid distributor in the sulfuric acid concentrator column.

Preferably, the recirculated acid is directed to the bottom of the sulfuric acid condenser.

The stripping media can be heated by electrical heating or by indirect heat exchange with saturated or superheated steam, process gas, hot air, molten heat transfer salt or heat transfer oil. Any combination of the mentioned air heating methods is also applicable. Preferably the heated stripping media has a temperature of 100-700°C when it enters the concentrator column.

The present invention further relates to an acid recirculation loop for carrying out the process for increasing the concentration of already concentrated sulfuric acid, in accordance with appended claim 14.

The present invention further relates to an acid recirculation loop for carrying out the process for increasing the concentration of already concentrated sulfuric acid, in accordance with appended claim 15.

The present invention relates also to an improved stand-alone sulfuric acid concentrator column for use in the process for increasing the concentration of already concentrated sulfuric acid, in accordance with appended claim 16. A particular embodiment thereof is recited in sub-claim 17.

In addition to the process for increasing the concentration of sulfuric acid, the invention also concerns various embodiments of equipment for use in the process, which are described in the following. Numbers in brackets refer to the drawings, in which
Fig. 1 shows a WSA plant equipped with an acid concentration column,
Fig. 2 shows another embodiment of a WSA plant, where the concentration column is installed in an external vessel to the WSA container,
Fig. 3 shows a stand-alone version of the sulfuric acid concentration unit, and
Fig. 4 shows an alternative process layout of a stand-alone version of the sulfuric acid concentration unit.

The various embodiments of equipment for use in the process according to the invention are described in more detail in the following.

### Description of a WSA plant equipped with an acid concentration column

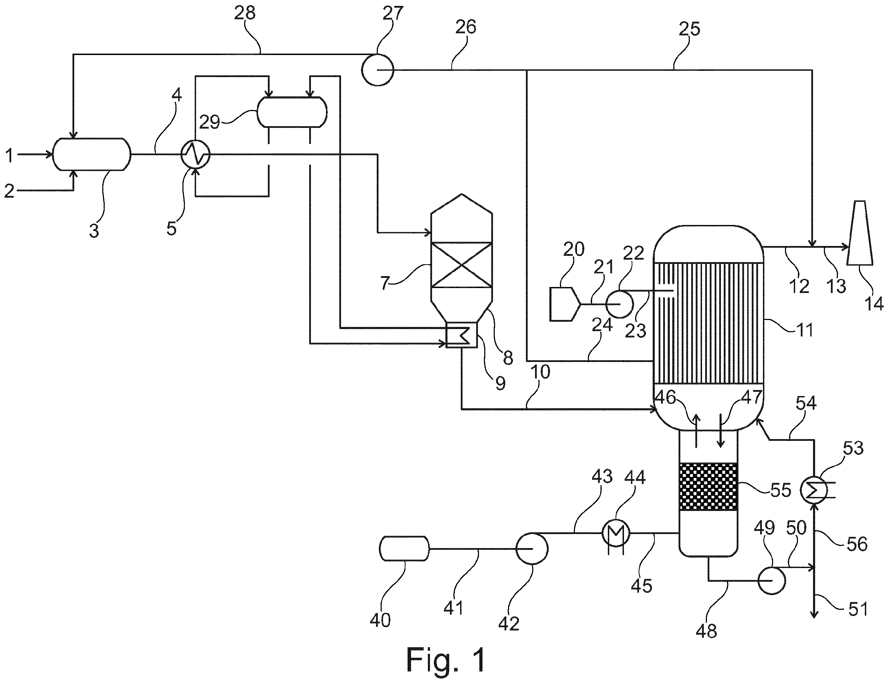

A typical wet gas sulfuric acid (WSA) plant treating a feed stream, which contains one or more sulfur compounds, by converting the sulfur compounds into concentrated sulfuric acid is shown in Fig. 1 excluding (49) to (54) and (56).

The sulfur-containing feed (1), which can be liquid as well as gaseous, is incinerated with hot air (28) and optionally a support fuel (2) in a thermal combustor (3) at 800-1200°C. At this temperature, all sulfur in the feed stream is converted into sulfur dioxide (SO₂). The SO₂-containing process gas (4) is then cooled in a waste heat boiler (5) prior to converting between 97 and 99.9 % of the SO₂ to SO₃ in an adiabatic catalytic layer (7) containing a catalyst for converting SO₂ to SO₃. Depending on the required conversion efficiency of SO₂, one to three catalytic layers with process gas cooling in between will be necessary.

The fully converted process gas (8) is then cooled to 250-300°C in the process gas cooler (9). In the process gas cooler, a fraction of the SO₃ reacts with water vapor to form sulfuric acid vapor (hydration of SO₃). Then the process gas (10) is further cooled to about 100°C in the WSA condenser (11), where the final hydration of SO₃ and condensation of H₂SO₄ takes place.

The WSA condenser (11) can either be configured with process gas (10) flowing in vertical tubes and cooling air (23) flowing on the shell side, or alternatively with process gas (10) on the shell side of horizontal tubes and cooling air (23) or sulfuric acid plant feed gas on the tube side. The WSA condenser can also be configured as a packed column where the process gas is contacted in counter current with circulating sulfuric acid.

The cleaned process gas (12) is optionally reheated by addition of hot air (25), and then the optionally heated gas (13) is emitted to the atmosphere through the stack (14).

Alternatively, the cleaned process gas (12) is sent to a tail gas treatment unit, provided that the composition of pollutants in the cleaned gas exceeds the local emission limits. Such tail gas treatment units are typically scrubbers for SO₂ removal and/or filters for acid mist removal. The tail gas treatment unit can also be a second SO₂ converter and a second sulfuric acid condenser.

The sulfuric acid (47) condensed in the WSA condenser flows into the top of the concentrator column (55). On the top of the column is a liquid distributor, ensuring that the acid being fed to the packed bed of the concentrator column is evenly distributed over the entire cross sectional area, providing the best possible contact between acid and dried air. In the packed bed of the concentrator column, just downstream of the liquid distributor, the sulfuric acid is contacted in counter-current with hot dried air (45) produced in a dry air unit (40). The dried air is typically heated to 200-300°C before being sent to the concentrator column. By stripping off mainly water, but also some sulfuric acid, from the downward flowing sulfuric acid, the acid concentration increases. The dried air containing the water and sulfuric acid vapors (46) flows into the bottom of the WSA condenser (11), where it is mixed with the process gas (10) coming from the process gas cooler (9).

The concentrated acid product from the ISAC column (48) is then directed to an acid cooling system via line (51) (not shown in Fig. 1), which cools the hot acid down to 30-40°C. Then the cold acid is either sent to storage or passed directly to an acid consuming process.

### Description of a WSA plant equipped with an improved acid concentrator

The layout of the WSA plant equipped with an improved acid concentrator is in many ways similar to the layout described above. The specific difference in layout is the hot acid recirculation loop, which is shown with numbers (48) to (56) in Fig. 1.

The hot concentrated sulfuric acid leaving the bottom of the ISAC column (48) flows to the hot acid pump (49), where the pressure of the acid is increased to compensate for any pressure drop(s) in optional downstream heat exchanger(s) and to increase elevation in the acid circulation loop.

To ensure that the acid pump does not run dry, a reservoir or tank is preferably located at the suction side of the pump. It can either be integrated in the acid concentrator column or be a separate tank, located between the outlet of the concentrator column and the inlet to the acid recirculation pump (49).

The hot acid (50) leaving the pump is then split into two streams: The product acid stream (51) is directed to the acid cooling system, while the acid circulation stream (56) is optionally directed to an acid heater (53), where the sulfuric acid temperature is increased to 200-270°C. Then the hot acid (54) is directed to the top of the concentrator column (55), where the hot acid is mixed with the acid from the WSA condenser (47) and flows downwards through the packed bed (55).

One advantage of the acid circulation loop is that the concentration of the sulfuric acid at the top of the concentrator column is increased (47), thereby further increasing the sulfuric acid concentration at the outlet (48) of the concentrator column.

Another advantage is that the increased flow of sulfuric acid in the concentrator column allows for a higher flow of dried hot air (45), not exceeding the maximum gas-to-liquid ratio which for this system is around 0.4 Nm³ air/kg acid. Operating with higher gas-to-liquid ratios will increase the risk of drying out parts of the packed bed, resulting in lower stripping efficiency in the column.

These two advantages eliminate the constraint on the sulfuric acid concentration capacity of the present layout of the acid concentrator unit, thereby allowing to produce >98.0 wt% sulfuric acid product at almost any given concentration of sulfuric acid leaving the bottom of the WSA condenser (11).

As indicated above, the acid circulation system can also be designed without the acid heater (53), but then the temperature of the dried air (45) is preferably increased to 300-700°C in order to supply sufficient energy to strip off water from the sulfuric acid. That can only be allowed by recycling acid to the top of the concentrator column such that complete wetting of the packing is ensured and heat is efficiently transferred from the hot dried air to the down flowing acid. Insufficient cooling of the hot dried air can damage the sulfuric acid condenser.

In a further embodiment of the invention, the product acid stream (51) is withdrawn upstream the acid circulation pump (49), such that the product acid flow can be controlled with a simple overflow or liquid level control in the acid reservoir or tank.

In a still further embodiment of the invention, the recycle acid line (54) is directed to the bottom of the sulfuric acid condenser and is mixed with the condenser acid before being directed to the top of the concentrator column, thereby providing a better mixing of the two acid streams and a simpler mechanical construction.

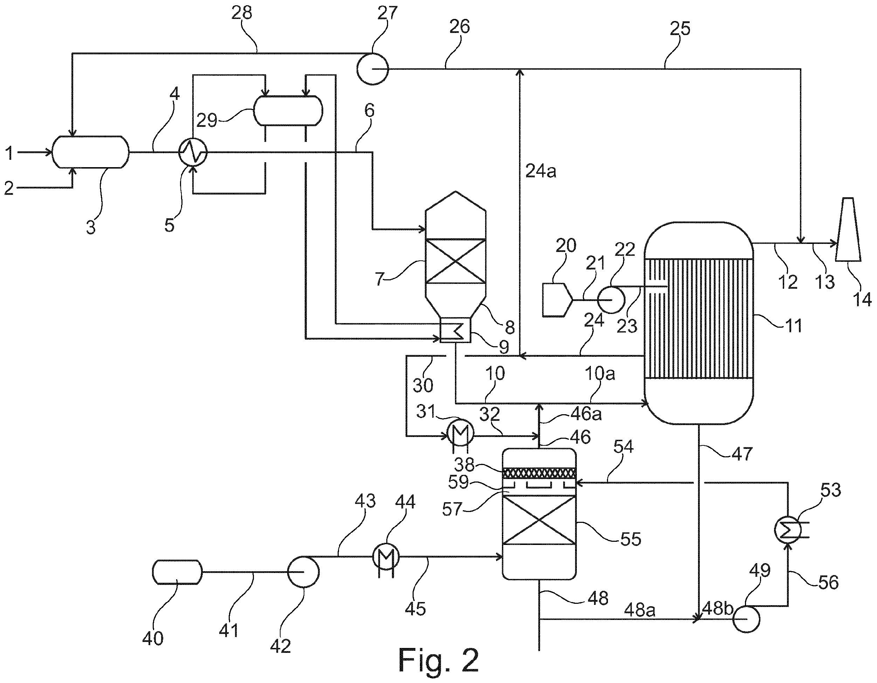

Yet another embodiment of the invention is shown in Fig. 2. In this embodiment, the concentrator column (55) is installed in an external vessel to the WSA condenser. The sulfuric acid from the WSA condenser (47) flows directly to the hot acid pump (49) which is used to pump the acid to the elevation of the liquid inlet of the concentrator column (54). This means that the WSA condenser (11) does not have to be elevated above the concentrator column (55) to make space for the concentrator column below the WSA condenser allowing gravity flow of the sulfuric acid from the WSA condenser to the concentrator column. The H₂SO₄ and H₂O containing air from the acid concentrator (46) is preferably transferred to the WSA condenser by mixing it with the process gas from the SO₂ converter (10). Any liquid entrainment or acid mist in the air from the acid concentrator off-gas (59) is optionally removed in a demister (58) before the cleaned acid concentrator off-gas (46) is added to the process gas from the SO₂ converter (10).

In order to prevent condensation of sulfuric acid in the process gas ducts (46a) and (10a), 300-700°C hot air (32) is preferably added to the cleaned acid concentrator off-gas air (46) before mixing with the process gas from the SO₂ converter (10). The combined process gas (10a) is then transferred to the WSA condenser (11). The source of hot air (32) is preferably hot cooling air (24) from the WSA condenser (11) which is further heated to a temperature of 300-700°C in an additional air heater (31). Alternatively, the hot air (32) can be taken as a side stream from the hot dried air to the acid concentrator (45).

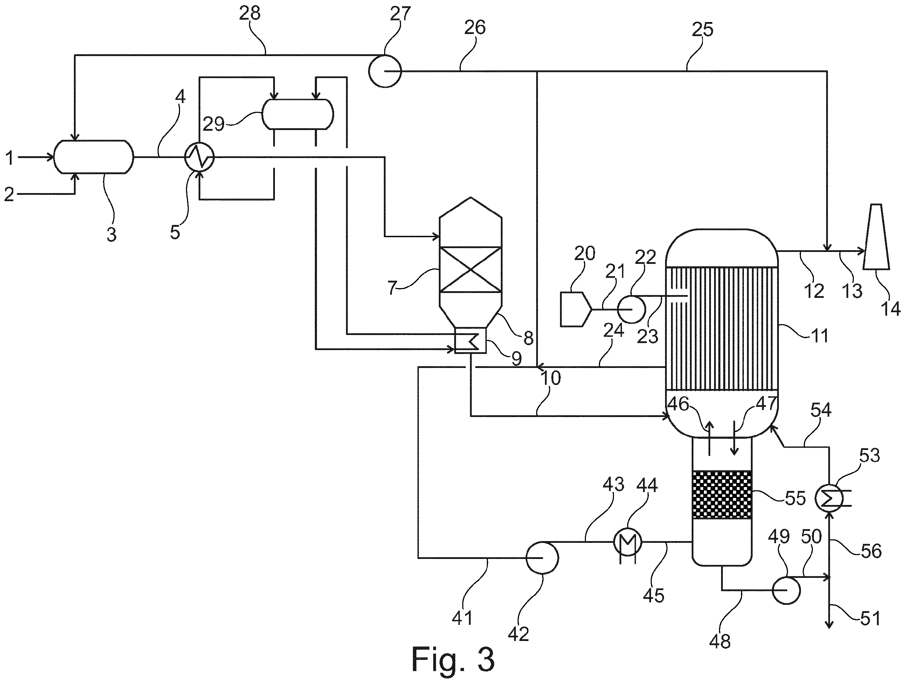

In a still further embodiment of the invention, the dry air unit (40) is omitted, and hot ambient air is used for the stripping, as shown in Fig. 3. In this configuration, the stripping air may be withdrawn from the hot cooling air outlet from the WSA condenser (24). This is however only possible when the humidity of the ambient air is not too high, as will be shown in Example 2.

In a still further embodiment of the invention, process gas is used as stripping medium in the sulfuric acid concentration column. The benefit of this is a saving in capital cost for the dried air unit and a potential saving in the energy input for heating the stripping medium, because the process gas may be available at a higher temperature compared to ambient air from the WSA condenser or dried air from the dried air unit.

Process gas is understood as process gas from the WSA plant or from any other process plant. The most important parameter of the process gas is the concentration of water in the process gas. In the case where the process gas is taken from the WSA plant, e.g. from the outlet of the last catalyst bed in the SO₂ converter (8), the water concentration is considered relative to the concentration of sulfur trioxide, because sulfur trioxide will react with water in the process gas to form sulfuric acid according to the hydration reaction (1):

SO₃ (g) + H₂O (g) = H₂SO₄ (g) + 101 KJ/mole (1)

Similar to the use of ambient air as stripping medium, it can, however, be difficult to obtain product acid concentrations of 98.0-98.5 wt% when the H₂O concentration on unhydrated basis subtracted the SO₃ concentration on unhydrated basis is higher than about 3-4.5 vol%.

### Description of a stand-alone version of the improved acid concentrator

A stand-alone version of the sulfuric acid concentration unit using the present invention is shown in Fig. 3.

Cold acid feed (57) is first preheated in the product acid cooler (58) by heat exchange with the hot concentrated sulfuric acid product stream (51). The product acid cooler may be divided into a number of heat exchangers in series in different construction materials in order to reduce the investment costs.

The preheated acid feed (60) is then mixed with recycled product acid (52) prior to the combined acid stream optionally being further heated to 200-270°C in the recycle acid heater (53). The optionally further heated acid feed (54) then enters the top of the concentrator column (55) or the bottom of the sulfuric acid condenser (11) where it is combined with the acid from the WSA condenser (47). The combined stream is contacted with the hot dried air (45) in counter-current flow, transferring mainly water, but also some sulfuric acid from the liquid phase to the gas phase, thus increasing the sulfuric acid concentration in the liquid phase.

The concentrated acid (48) leaving the concentrator column enters the hot acid circulation pump (49) which supplies the pressure to overcome the pressure drop in piping and heat exchangers (53) and (58) and the height difference between the acid pump discharge (position (50)) and the concentrator column recycle acid inlet (position (54)).
A means for maintaining a liquid level at the suction side of the acid recirculation pump (49) is installed, either as a sump integrated in the acid concentrator column or as a separate holding tank.

The hot concentrated acid (50) is split into two fractions. One fraction is recirculated (52), mixed with the preheated acid feed (60) and then sent back to the concentrator column inlet (54) via the optional recycle acid heater (53). The other fraction of the hot concentrated acid (51) is sent to the product acid cooler (58) for heat exchange with the cold acid feed (57), and the cold product stream (59) may be further cooled to a more proper storage temperature.

The amount of acid recycled via line (52) depends on the initial concentration of the acid feed (57) and the desired concentration of the product acid (59). The higher the difference in concentration, the higher the recycle flow will be.

The air (41), used for stripping water from the sulfuric acid, is first dried in a dry air unit (40). The dry air unit is typically a desiccant absorption dehumidifier, but the dry air can also be ambient air compressed to 5-10 barg and/or cooled to low temperature in order to condense out the bulk part of the water. Downstream the drying unit, the dried air (41) is compressed in the cooling air blower (42) before it is used as cooling medium (43) on the shell side of the WSA condenser (11). The dried air is heated to 180-240°C on the shell side of the WSA condenser and leaves the WSA condenser at the bottom outlet via line (24). This partially heated dried air is further heated to about 300-700°C in the air heater (44) before being sent through the line (45) to the air inlet of the concentrator column (55). The final heating of the air can be carried out by electrical heating or indirect heat exchange with e.g. saturated or superheated steam, process gas, molten heat transfer salt or heat transfer oil or with a combination of the above-mentioned methods.

The water and sulfuric acid vapors (46), which are carried away with the hot dried air in the concentrator column (55), flow up into the bottom of the WSA condenser (11). In the WSA condenser, the gas (46) is cooled to typically 70-120°C and the sulfuric acid vapor is condensed as 90-98 wt% H₂SO₄, which is returned to the top of the concentrator column (55) by flowing into the acid collector and directly to the concentrator column as indicated by (47). Clean gas (12), that contains minor amounts of sulfuric acid mist and water vapor, exits the top of the WSA condenser (11) and may be discharged directly to the atmosphere via a stack. Depending on the local emission requirement the clean gas (12) may be subject to further sulfuric acid mist reduction in an acid mist filter (16), e.g. in a candle filter or a wet electrostatic precipitator. A gas cooler or water/weak acid or air quench may be used to reduce the inlet gas temperature to the sulfuric acid mist filter. These are not shown in Fig. 3.

In a special embodiment, the recycle acid heater (53) is foreseen to be of the type plate-and-frame, block, shell- and-tube, double tube or similar. The heating media for the recycle acid heater is foreseen to be heat transfer oil but it can also be other heat transfer media like superheated steam, condensing high pressure steam or molten heat transfer salt. Alternatively, the heating can be done directly by electrical means, either by thermal conduction from a resistor or electrical energy converted into microwaves, which are absorbed into the sulfuric acid in a tube or flow cell.

A recycle heater using a double-tube arrangement with heat transfer oil as the heating media is described in DE 10 2007 059 802 B3.

In a special embodiment, the recycle acid heater is omitted, and in order to supply sufficient heat into the system, the hot air temperature must be increased to 350-700°C.

The invention is described further in the examples which follow.

### Example 1

In this example, the acid concentrator column is an integrated part of the wet gas sulfuric acid plant, as shown in Fig. 1.

Process gas containing sulfur trioxide, water and sulfuric acid vapor (10) enters the WSA condenser (11) in which the sulfuric acid is condensed and leaves the WSA condenser at the bottom outlet via line (47) and entering the top of the concentrator column (55). Hot dried air (45) is used to strip off water (and a little sulfuric acid) from the downwards flowing acid, and the concentrated sulfuric acid leaves the concentrator column via line (48).

Table 1 shows the main operating parameters for the conventional acid concentrator without hot acid recycle and the new improved acid concentrator with acid recycle with and without acid heating.

In case A, which is a conventional once-through acid concentrator with no recycle, the sulfuric acid product concentration is increased from 94 wt% to 95.5 wt%. The product concentration is limited by the flow of hot dried air entering the concentrator column. For this system, the maximum gas to air ratio is ∼0.4 Nm³ air/kg sulfuric acid. If higher air flows are used, the risk of column flooding and/or channeling increases, thus significantly reducing the effectiveness of the concentrator column.

In cases B, C and D, which are three examples of the present invention, the sulfuric acid concentration is increased from 94 wt% to 98 wt%. Whereas options B, C and D produce the same sulfuric acid product concentration, the operating costs of the concentrating operations are far from equal.

In option B, the recycle acid heater (53) is omitted from the layout, and the energy for water stripping in the concentrator column can only be supplied via the hot dried air (45). The energy requirements for drying and heating the air are relatively high compared to the energy transferred from the air to the acid. Therefore, a high flow of air is required, and in order not to exceed the maximum air to acid ratio, much acid has to be recycled.

In option C, energy can be transferred directly to the recycled acid ((56) and (54)) via the recycle acid heater (53). As this energy is supplied with very low heat losses, the energy cost of concentrating the sulfuric acid is significantly decreased.

In option D, the recycle acid heater (53) is omitted similar to option B, but the hot dried air (45) temperature is increased from 260°C to 550°C. Due to the higher dried air temperature compared to option B, more energy is transferred for concentrating the acid, and thus the dried air flow can be significantly reduced.

This can be seen in Table 1 below, where the energy input is decreased from 0.54 kWh/kg when all energy is supplied via the hot dried air (option B) to 0.25 kWh/kg when the energy primarily is supplied directly to the hot recycled acid, i.e. a reduction of more than 50%. However, the energy consumption is further reduced when the energy is supplied to the dried air by further increasing the dried air temperature (option D), i.e. a reduction of 70% compared to option B.

Another benefit of increasing the dried air temperature and omitting the acid heater is that the flow of hot dried air can be decreased, thus reducing the size of not only the concentrator column (55) and dry air unit (40), but also of the WSA condenser (11). In option B and C, the flow of hot dried air is around 15% and 6% of the process gas flow (10), respectively, which is decreased to only 2% in option D.

Obviously the smallest plant size and lowest energy consumption is achieved with the conventional acid concentrator layout, but if the achievable acid concentration is not acceptable, then the conventional acid concentrator solution is not an option.

In Table 1 (next page), the main operating data for a WSA plant equipped with an ISAC with and without recycle of sulfuric acid are shown. The process gas flow (10) to the WSA condenser is 58,400 Nm³/h containing 0.7 vol% SO₃ (unhydrated) and 12 vol% H₂O. The process gas is cooled from 250°C down to 100°C, and 94.0 wt% H₂SO₄ leaves the WSA condenser through the bottom (47).
Case A: Conventional acid concentrator without recycle
Case B: Acid concentrator with recycle without acid reheating
Case C: Acid concentrator with recycle and acid reheating
Case D: Acid concentrator with recycle without acid reheating and further heated dried air

**Table 1**

| Case | A | B | C | D |
|---|---|---|---|---|
| product acid concentra-tion (51) | 95.5 wt% | 98.0 wt% | 98.0 wt% | 98.0 wt% |
| acid product flow (51) | 1900 kg/h | 1850 kg/h | 1850 kg/h | 1850 kg/h |
| acid recycle flow (54) | 0 | 20,000 kg/h | 6000 kg/h | 3000 kg/h |
| gas-to-liquid ratio | 0.4 Nm³/kg | 0.4 Nm³/kg | 0.4 Nm³/kg | 0.27 Nm³/kg |
| dried air temperature (45) | 260°C | 260°C | 260°C | 550°C |
| dry air flow (45) | 800 Nm³/h | 8800 Nm³/h | 3300 Nm³/h | 1300 Nm³/h |
| dried air to process gas flow ratio | 1 % | 15 % | 6 % | 2 % |
| power consumption for dry air unit incl. heater (40 + 44) | 90 kW | 1000 kW | 370 kW | 290 kW |
| power consumption for recycle acid heater (53) | 0 | 0 | 90 kW | 0 |
| power consumption per kg acid | 0.05 kWh/kg | 0.54 kWh/kg | 0.25 kWh/kg | 0.16 kWh/kg |
| power consumption per kg acid per 1 wt% conc. increase | 0.03 kWh/kg/% | 0.14 kWh/kg/% | 0.06 kWh/kg/% | 0.04 kWh/kg/% |
| estimated packed column cross flow area (index) | 100 | 1100 | 400 | 200 |

### Example 2

In this example, the effect of H₂O concentration in the hot air used for stripping off water from the acid in the acid concentrator is investigated.

Table 2 below shows the main operating parameters for the improved acid concentrator with acid recycle without acid heating and with and without drying of the stripping air.

The basis for the calculation is the layout given in Example 1, Case D, i.e. concentrating 1850 kg/h sulfuric acid in an acid concentrator connected to a WSA condenser in a WSA plant. The acid concentration from the WSA condenser is about 94 wt% and the acid concentrator is configured without an acid heater but with the use of further heated hot air.

In case D, the stripping air is dried to a water content of 0.5 wt% which is equivalent to a water dew point of about 5°C.

Case P is similar to case D, but in this case the air drying unit (40) is omitted, and hence a small fraction of the hot cooling air (24) from the WSA condenser is further heated in an air heater and used for the stripping in the acid concentrator column, as shown in Fig. 3. The H₂O concentration in the stripping air is 2 wt%, which is equivalent to a dew point temperature of about 27°C.

Case Q is similar to case P, where the air drying unit (40) is omitted and the partially heated stripping air is taken from the hot air from the WSA condenser, but in this case the H₂O concentration of the stripping air is 2.8 wt%, which is equivalent to a dew point temperature of 32°C.

In all the three cases D, P and Q, the temperature of the stripping air (45) is adjusted to obtain a maximum acid temperature of 255°C in the acid recycle loop (54), which is considered the maximum temperature for the construction materials in the acid recycle loop (48-56). The dried air flow (45) is then adjusted to obtain the required acid product concentration (51), which is 98 wt%. Finally, the acid recycle flow (54) is adjusted in order not to exceed the maximum gas-to-liquid ratio of 0.4 Nm³ air per kg acid. The flow of stripping air (54) increases from 1300 Nm³/h to 2100 Nm³/h and 3800 Nm³/h, when the water concentration in the stripping air (45) increases from 0.5 wt% to 2.0 wt% and 2.8 wt%, in cases D, P and Q, respectively. But because the stripping air does not have to be dried, and it can be partially heated in the WSA condenser, the power consumption is actually reduced from 290 kW in case D to 200 kW in case P. In case Q, the power consumption is increased slightly to 300 kW.

Option P has a lower capital cost compared to option D because the dry air unit (40) can be omitted.

This example also shows that it is not always beneficial, in terms of operating costs, to use dried air for the stripping, because partially heated air is available from the WSA condenser.

However, using ambient air for the stripping will make it difficult to reach a very high acid concentration (>98 wt%) in the most humid locations as shown in case Q, where the stripping air flow is increased significantly compared to case P.

In Table 2, the main operating data for a WSA plant, equipped with an acid concentrator and recycle of sulfuric acid, are shown.
Case D: Acid concentrator with recycle and further heated air dried to a water content of 0.5 wt%.
Case P: Acid concentrator with recycle and further heated ambient air with a dew point of 27°C (2 wt% H₂O).
Case Q: Acid concentrator with recycle and further heated ambient air with a dew point of 32°C (2.8 wt% H₂O).

**Table 2**

| Case | D | P | Q |
|---|---|---|---|
| product acid concentration (51) | 98.0 wt% | 98.0 wt% | 98.0 wt% |
| acid product flow (51) | 1,850 kg/h | 1,850 kg/h | 1,850 kg/h |
| acid recycle flow (54) | 3,000 kg/h | 3,500 kg/h | 7,500 kg/h |
| acid recycle temperature (54) | 254°C | 255°C | 255°C |
| gas-to-liquid ratio | 0.27 Nm³/kg | 0.37 Nm³/kg | 0.38 Nm³/kg |
| dried air temperature (45) | 550°C | 460°C | 420°C |
| dry air flow (45) | 1,300 Nm³/h | 2,100 Nm³/h | 3,800 Nm³/h |
| dew point temperature of stripping air (45) | 5°C | 27°C | 32°C |
| H₂O concentration in stripping air (45) | 0.5 wt% | 2 wt% | 2.8 wt% |
| stripping air to process gas flow ratio | 2% | 4% | 7% |
| power consumption for dry air unit incl. heater (40 + 44) | 290 kW | 200 kW | 300 kW |
| power consumption per kg acid | 0.16 kWh/kg | 0.11 kWh/kg | 0.16 kWh/kg/% |
| power consumption per kg acid per 1 wt% conc. increase | 0.039 kWh/kg/% | 0.027 kWh/kg/% | 0.040 kWh/kg/% |
| estimated packed column cross flow area (index) | 200 | 275 | 500 |

### Example 3

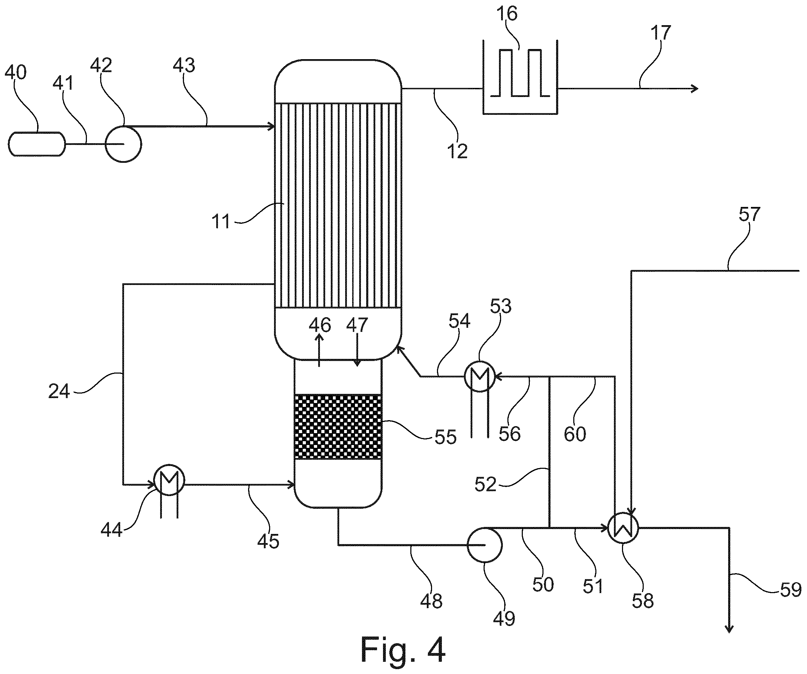

Table 3 shows the operating parameters for a stand-alone sulfuric acid concentrator used to concentrate 10,000 kg/h sulfuric acid by the process according to the process layout as shown in Fig. 4.

Case E shows the main operating data without recycle of sulfuric acid, while cases F and G show the main operating data with recycle and with acid heating and very hot dried air, respectively. The concentration increase which can be obtained in case of no acid recycle is limited to about 2.1 wt% in case E (i.e. 96.6 wt%) while 98.0 wt% sulfuric acid concentration can be achieved in cases F and G.

As in example 1 it is seen that the conventional acid concentrator layout without the acid recycle is the most economical solution, both regarding the size of the unit and regarding the operating cost. But the conventional acid concentrator is limited in the achievable degree of concentration of the acid feed and thus, if the achievable concentration is not acceptable, then the conventional solution cannot be used.

An option could be to arrange two or three conventional acid concentrator units in series, using the hot or cooled product acid (51) or (59) from one unit as feed to the next stand-alone acid concentrator unit.

The proposed improvement of the acid concentrator unit, including acid recirculation and both alternatives with acid heating and without acid heating but higher dried air temperature will be much simpler solutions.

Table 3 shows the main operating parameters for a stand-alone sulfuric acid concentration plant without use of a sulfuric acid recycle, and the two options mentioned for the case with sulfuric acid recycle, namely with acid heating and without acid heating but very hot dried air. A 10,000 kg/h acid feed with a temperature of 40°C is used. In case F, the feed acid is heated to 240°C in the recycle acid heater (53) before being introduced into the ISAC column. In cases E and G, the acid is only heated to about 201°C in the product acid cooler (58).
Case E: Stand-alone concentrator without acid recycle
Case F: Stand-alone concentrator with acid recycle and acid heating
Case G: Stand-alone concentrator with acid recycle and very hot dried air

**Table 3**

| Case | E | F | G |
|---|---|---|---|
| feed acid concentration | 94.5 wt% | 94.5 wt% | 94.5 wt% |
| product acid concentration (59) | 96.6 wt% | 98.0 wt% | 98.0 wt% |
| acid product flow (59) | 9800 kg/h | 9600 kg/h | 9600 kg/h |
| acid recycle flow (52) | 0 | 20,000 kg/h | 16,000 kg/h |
| dried air flow (45) | 4050 Nm³/h | 10,650 Nm³/h | 6500 Nm³/h |
| dried air temperature (45) | 300°C | 300°C | 550°C |
| gas-to-liquid ratio | 0.4 Nm³/kg | 0.35 Nm³/kg | 0.25 Nm³/kg |
| power consumption for dry air unit incl. air heater (40 + 44) | 280 kW | 670 kW | 1004 kW |
| power consumption for recycle acid heater (53) | 280 kW | 544 kW | 0 kW |
| power consumption per kg acid | 0.06 kWh/kg | 0.11 kWh/kg | 0.10 kWh/kg |
| power consumption per kg acid per 1 wt% conc. increase | 0.027 kWh/kg/% | 0.032 kWh/kg/% | 0.030 kWh/kg/% |

### Example 4

In this example, the effect of changing the temperature of the sulfuric acid in the recycle stream (54) has been investigated.

The basis for the calculations is the layout given in example 3, i.e. concentrating 10 t/h acid from an initial concentration of 94.5 wt% to 98.0 wt%. This increase in concentration is not achievable with the once-through acid concentrator layout.

The results of the calculations of the recycle acid concentrator layout are shown in table 4. As the temperature of the recycled acid is increased, the acid recycle ratio (i.e. the acid recycle flow) decreases as the higher temperature increases the vapor pressure of H₂O (and H₂SO₄) and thus, stripping becomes more effective as the driving force for evaporation increases. This also means that less stripping air is required to carry out the same concentration of the feed, and with 260°C recycle acid temperature, the air-to-liquid ratio can be decreased while maintaining the high concentration of product acid.

The total energy input also decreases as the recycle acid temperature increases, i.e. the energy transferred directly to the recycle acid stream is utilized much more efficiently compared to the energy input to the hot dried air. This is mainly due to the high energy cost of drying the air, but also to the relatively higher heat loss of the air stream.

Table 4 shows the main operating parameters for a stand-alone sulfuric acid concentration plant with use of a sulfuric acid recycle and acid heating. A 10 t/h acid feed with an initial temperature of 40°C and a concentration of 94.5 wt% is used. The dried air for the acid concentrator column has a temperature of 300°C at the column inlet. The product acid concentration is 98.0 wt%.

**Table 4**

| Case | H | I | J | K | L | M |
|---|---|---|---|---|---|---|
| acid temperature | 230 °C | 240 °C | 250 °C | 260 °C | 270 °C | 280 °C |
| in recycle stream (54) | | | | | | |
| acid recycle flow (52) | 32.0 t/h | 20.0 t/h | 13.5 t/h | 9.0 t/h | 10.0 t/h | 7.0 t/h |
| air-to-liquid ratio | 0.35 Nm³/kg | 0.35 Nm³/kg | 0.35 Nm³/kg | 0.35 Nm³/kg | 0.2 Nm³/kg | 0.2 Nm³/kg |
| dry air flow (45) | 14.7 kNm³/h | 10.5 kNm³/h | 8.2 kNm³/h | 6.7 kNm³/h | 4.1 kNm³/h | 3.4 kNm³/h |
| energy input to dry air unit including heater (40 + 44) | 980 kW | 670 kW | 500 kW | 390 kW | 260 kW | 160 kW |
| energy input to recycle acid heater (53) | 450 kW | 545 kW | 600 kW | 635 kW | 730 kW | 750 kW |
| total energy input | 1430 kW | 1215 kW | 1100 kW | 1025 kW | 925 kW | 910 kW |
| fraction of energy input to recycle acid | 32% | 45% | 55% | 62% | 79% | 82% |

The total energy input decreases with increasing recycle acid temperature (and thus energy input to the recycle acid), and the lowest heat input is most likely achieved when the heat input to the recycle acid is close to 100%. For practical reasons it is not recommended to increase the temperature of the acid above 240-260°C as the choice of construction materials for pump, heat exchanger (including gaskets), piping and acid concentrator column gets very challenging due to the high corrosiveness of the hot concentrated acid. If more resistant materials are developed in the future, then the acid temperature could be increased for a lower total energy input.

### Example 5

In this example, the effect of changing the dried air temperature inlet to the concentrator column (45) has been investigated.

The basis for the calculations is the layout given in example 3, i.e. concentrating 10 t/h acid from an initial concentration of 94.5 wt% to 98.0 wt%. This increase in concentration is not achievable with the once-through acid concentrator layout, and in this example focus is on the case with no acid heating but with higher dried air temperature.

The results of the calculations of the recycle acid concentrator layout are shown in table 5. As the temperature of dried air temperature (45) is increased, the demand for dried air flow decreases and finally the required total energy input for drying and heating the air is reduced from 1191 kW when 450°C air is used (case N) to 906 kW when 650°C air is used (case O). Looking at the resulting acid recycle temperature (54), this also increases with the increasing dried air temperature (45). At 650°C air temperature, an acid recycle temperature of 259°C is obtained, which is approaching the practical limit for the construction materials available for the acid recycle line as mentioned in Example 4.

**Table 5**

| Case | N | G | O |
|---|---|---|---|
| dry air temperature (45) | 450°C | 550°C | 650°C |
| dry air flow (45) | 10,000 Nm³/h | 6, 500 Nm³/h | 4,700 Nm³/h |
| acid recycle temperature (54) | 241°C | 251°C | 259°C |
| acid recycle flow (54) | 30,000 kg/h | 16, 000 kg/h | 8,500 kg/h |
| Preheated feed acid temperature (60) | 191°C | 201°C | 209°C |
| air-to-liquid ratio | 0.25 Nm³/kg | 0.25 Nm³/kg | 0.25 Nm³/kg |
| energy input to dry air (40) | 291 kW | 188 kW | 136 kW |
| energy input to heat dried air (44) | 900 kW | 816 kW | 771 kW |
| total energy input | 1,191 kW | 1,004 kW | 906 kW |

## Claims

1. A process for increasing the concentration of already concentrated sulfuric acid, comprising the step of stripping water from the sulfuric acid by contacting it with a stripping media selected from air and process gas in a sulfuric acid concentrator column to increase the concentration of the acid leaving the column,
wherein a fraction of the acid, which is leaving the column, is recycled back to a position upstream the column through an acid recirculation loop.

2. Process according to claim 1, wherein the air is ambient air or dried air.

3. Process according to claim 1 or 2, wherein the air used for stripping has a water concentration below 4 vol%, preferably below 0.8 vol%.

4. Process according to claim 1, wherein the process gas used for stripping has a concentration of H₂O (unhydrated) minus the concentration of SO₃ (unhydrated) below 4.5 vol%, preferably below 1 vol%.

5. Process according to any of the claims 1-4, wherein the stripping media has a temperature of 100-700°C, preferably 300-700°C and most preferably 350-600°C.

6. Process according to claim 1, wherein the acid is heated by heat exchange during its passage through the acid recirculation loop.

7. Process according to claim 6, wherein the acid is heated to a temperature of 200-270°C, preferably 230-260°C, during its passage through the acid recirculation loop.

8. Process according to any of the claims 1-7, wherein the already concentrated sulfuric acid is a sulfuric acid condenser effluent.

9. Process according to claim 1, wherein the concentration of the already concentrated sulfuric acid is 70-98 wt%, preferably 90-98 wt%.

10. Process according to claim 1, wherein the concentration of sulfuric acid product from the concentration column is 95-98.6 wt%, preferably 97-98.6 wt%.

11. Process according to any of the claims 1-10, wherein the recirculated acid is fed directly to the liquid distributor in the sulfuric acid concentrator column.

12. Process according to any of the claims 8-10, wherein the recirculated acid is directed to the bottom of the sulfuric acid condenser.

13. Process according to any of the claims 1-5, wherein the stripping media is heated by electrical heating or by indirect heat exchange with saturated or superheated steam, process gas, molten heat transfer salt, heat transfer oil or any combination thereof.

14. An acid recirculation loop for carrying out the process according to any of the claims 1-13, said loop comprising:
- an acid pump (49) fed with hot concentrated sulfuric acid (48) from the outlet of a sulfuric acid concentrator column (55) and optionally the sulfuric acid condenser effluent (47) ,
- an acid heater (53), in which a fraction of the acid from the outlet of the column (56) is heated to a temperature of 200-270°C,
- a pipe (54) directing the heated acid to the inlet of the concentrator column (55) or to the bottom of the sulfuric acid condenser (11), and
- an acid reservoir located upstream the acid pump (49), either integrated in the concentrator column or as a separate tank or vessel.

15. An acid recirculation loop for carrying out the process according to any of the claims 1-5 and 8-13, said loop comprising:
- an acid pump (49) fed with hot concentrated sulfuric acid (48) from the outlet of a sulfuric acid concentrator column (55) and optionally the sulfuric acid condenser effluent (47) ,
- a pipe (54) directing the recirculated acid to the inlet of the concentrator column (55) or to the bottom of the sulfuric acid condenser (11), and
- an acid reservoir located upstream the acid pump (49), either integrated in the concentrator column (55) or as a separate tank or vessel.

16. An improved stand-alone sulfuric acid concentrator column for use in the process according to any of the claims 1-13, said column being connected to
- a product acid cooler (58) for pre-heating a cold sulfuric acid feed stream (57) by heat exchange with a hot concentrated sulfuric acid product stream (51),
- an acid pump (49) fed with hot concentrated sulfuric acid (48) from the outlet of a concentrator column (55),
- an acid reservoir located upstream of the acid pump (49), either integrated in the concentrator column or as a separate tank or vessel, and optionally
- a recycle acid heater (53), in which the pre-heated acid feed (60), mixed with recycled product acid (52), is heated to 200-270°C before being fed to the inlet of the concentrator column (55) or the bottom of the sulfuric acid condenser (11).

17. Sulfuric acid concentrator column according to claim 16, wherein the hot acid feed (54) is combined with sulfuric acid from a sulfuric acid condenser (11) and contacted with the stripping media (45) flowing in counter current, thereby increasing the sulfuric acid concentration in the liquid phase.

## Patentansprüche

1. Verfahren zur Erhöhung der Konzentration von bereits konzentrierter Schwefelsäure, umfassend den Schritt des Strippens von Wasser aus der Schwefelsäure durch Inkontaktbringen mit einem Strippmedium, ausgewählt aus Luft und Prozessgas, in einer Schwefelsäurekonzentrationssäule, um die Konzentration der die Säule verlassenden Säure zu erhöhen,
wobei ein Teil der Säure, der die Säule verlässt, zu einer Position stromaufwärts der Säule durch einen Säurerückführungskreislauf zurückgeführt wird.

2. Verfahren gemäß Anspruch 1, wobei die Luft Umgebungsluft oder getrocknete Luft ist.

3. Verfahren gemäß Anspruch 1 oder 2, wobei die zum Strippen verwendete Luft eine Wasserkonzentration unter 4 Vol.-%, vorzugsweise unter 0,8 Vol.-%, aufweist.

4. Verfahren gemäß Anspruch 1, wobei das zum Strippen verwendete Prozessgas eine Konzentration von H₂O (unhydriert) abzüglich der Konzentration von SO₃ (unhydriert) unter 4,5 Vol.-%, vorzugsweise unter 1 Vol.-%, aufweist.

5. Verfahren gemäß einem der Ansprüche 1-4, wobei das Strippmedium eine Temperatur von 100-700 °C, vorzugsweise 300-700 °C und am meisten bevorzugt 350-600 °C aufweist.

6. Verfahren gemäß Anspruch 1, wobei die Säure während ihres Durchgangs durch den Säurerückführungskreislauf durch Wärmeaustausch erhitzt wird.

7. Verfahren gemäß Anspruch 6, wobei die Säure während ihres Durchgangs durch den Säurerückführungskreislauf auf eine Temperatur von 200-270 °C, vorzugsweise 230-260 °C, erhitzt wird.

8. Verfahren gemäß einem der Ansprüche 1-7, wobei die bereits konzentrierte Schwefelsäure ein Schwefelsäurekondensatorabstrom ist.

9. Verfahren gemäß Anspruch 1, wobei die Konzentration der bereits konzentrierten Schwefelsäure 70-98 Gew.-%, vorzugsweise 90-98 Gew.-%, beträgt.

10. Verfahren gemäß Anspruch 1, wobei die Konzentration des Schwefelsäureprodukts aus der Konzentrationssäule 95-98,6 Gew.-%, vorzugsweise 97-98,6 Gew.-%, beträgt.

11. Verfahren gemäß einem der Ansprüche 1-10, wobei die zurückgeführte Säure direkt dem Flüssigkeitsverteiler in der Schwefelsäurekonzentrationssäule zugeführt wird.

12. Verfahren gemäß einem der Ansprüche 8-10, wobei die zurückgeführte Säure auf den Boden des Schwefelsäurekondensators geleitet wird.

13. Verfahren gemäß einem der Ansprüche 1-5, wobei das Strippmedium durch elektrische Beheizung oder durch indirekten Wärmeaustausch mit gesättigtem oder überhitztem Dampf, Prozessgas, geschmolzenem Wärmeübertragungssalz, Wärmeübertragungsöl oder einer beliebigen Kombination davon erhitzt wird.

14. Säurerückführungskreislauf zur Durchführung des Verfahrens gemäß einem der Ansprüche 1-13, wobei der Kreislauf umfasst:
- eine Säurepumpe (49), die mit heißer konzentrierter Schwefelsäure (48) aus dem Auslass einer Schwefelsäurekonzentrationssäule (55) und optional dem Schwefelsäurekondensatorabstrom (47) gespeist wird,
- einen Säureerhitzer (53), in dem ein Teil der Säure aus dem Auslass der Säule (56) auf eine Temperatur von 200-270 °C erhitzt wird,
- eine Leitung (54), die die erhitzte Säure zum Einlass der Konzentrationssäule (55) oder zum Boden des Schwefelsäurekondensators (11) leitet, und
- ein stromaufwärts der Säurepumpe (49) angeordnetes Säurereservoir, das entweder in die Konzentrationssäule integriert oder als separater Tank oder Behälter ausgebildet ist.

15. Säurerückführungskreislauf zur Durchführung des Verfahrens gemäß einem der Ansprüche 1-5 und 8-13, wobei der Kreislauf umfasst
- eine Säurepumpe (49), die mit heißer konzentrierter Schwefelsäure (48) aus dem Auslass einer Schwefelsäurekonzentrationssäule (55) und optional dem Schwefelsäurekondensatorabstrom (47) gespeist wird,
- eine Leitung (54), die die zurückgeführte Säure zum Einlass der Konzentrationssäule (55) oder zum Boden des Schwefelsäurekondensators (11) leitet, und
- ein stromaufwärts der Säurepumpe (49) angeordnetes Säurereservoir, das entweder in die Konzentrationssäule (55) integriert oder als separater Tank oder Behälter ausgebildet ist.

16. Verbesserte eigenständige Schwefelsäurekonzentrationssäule zur Verwendung in dem Verfahren gemäß einem der Ansprüche 1-13, wobei die Säule verbunden ist mit
- einem Produkt-Säurekühler (58) zum Vorwärmen eines kalten Schwefelsäure-Zufuhrstroms (57) durch Wärmeaustausch mit einem heißen konzentrierten Schwefelsäureproduktstrom (51)
- einer Säurepumpe (49), die mit heißer konzentrierter Schwefelsäure (48) aus dem Auslass einer Konzentratorsäule (55) gespeist wird,
- einem stromaufwärts der Säurepumpe (49) angeordneten Säurereservoir, das entweder in die Konzentratorsäule integriert oder als separater Tank oder Behälter ausgebildet ist, und optional
- einem Rückführsäureerhitzer (53), in dem die vorgewärmte Säurezufuhr (60), gemischt mit der zurückgeführten Produktsäure (52), auf 200-270 °C erhitzt wird, bevor sie dem Einlass der Konzentrationssäule (55) oder dem Boden des Schwefelsäurekondensators (11) zugeführt wird.

17. Schwefelsäurekonzentrationssäule gemäß Anspruch 16, wobei die heiße Säurezufuhr (54) mit Schwefelsäure aus einem Schwefelsäurekondensator (11) kombiniert und mit dem im Gegenstrom fließenden Strippmedium (45) in Kontakt gebracht wird, wodurch die Schwefelsäurekonzentration in der flüssigen Phase erhöht wird.

## Revendications

1. Procédé pour augmenter la concentration d'acide sulfurique déjà concentré, comprenant l'étape d'extraction d'eau de l'acide sulfurique par sa mise en contact avec un milieu d'extraction choisi parmi l'air et un gaz de procédé dans une colonne de concentrateur d'acide sulfurique pour augmenter la concentration de l'acide sortant de la colonne,
dans lequel une fraction de l'acide, qui sort de la colonne, est recyclée vers une position en amont de la colonne à travers une boucle de recirculation d'acide.

2. Procédé selon la revendication 1, dans lequel l'air est de l'air ambiant ou de l'air séché.

3. Procédé selon la revendication 1 ou 2, dans lequel l'air utilisé pour l'extraction a une concentration en eau inférieure à 4 % en vol., de préférence inférieure à 0,8 % en vol.

4. Procédé selon la revendication 1, dans lequel le gaz de procédé utilisé pour l'extraction a une concentration de H₂O (non hydraté) moins la concentration de SO₃ (non hydraté) inférieure à 4,5 % en vol., de préférence inférieure à 1 % en vol.

5. Procédé selon l'une quelconque des revendications 1 à 4, dans lequel le milieu d'extraction a une température de 100 à 700 °C, de préférence de 300 à 700 °C et de manière préférée entre toutes de 350 à 600 °C.

6. Procédé selon la revendication 1, dans lequel l'acide est chauffé par échange thermique lors de son passage à travers la boucle de recirculation d'acide.

7. Procédé selon la revendication 6, dans lequel l'acide est chauffé à une température de 200 à 270 °C, de préférence de 230 à 260 °C, lors de son passage à travers la boucle de recirculation d'acide.

8. Procédé selon l'une quelconque des revendications 1 à 7, dans lequel l'acide sulfurique déjà concentré est un effluent de condenseur d'acide sulfurique.

9. Procédé selon la revendication 1, dans lequel la concentration de l'acide sulfurique déjà concentré est de 70 à 98 % en poids, de préférence de 90 à 98 % en poids.

10. Procédé selon la revendication 1, dans lequel la concentration du produit d'acide sulfurique provenant de la colonne de concentration est de 95 à 98,6 % en poids, de préférence de 97 à 98,6 % en poids.

11. Procédé selon l'une quelconque des revendications 1 à 10, dans lequel l'acide remis en circulation est alimenté directement au distributeur de liquide dans la colonne de concentrateur d'acide sulfurique.

12. Procédé selon l'une quelconque des revendications 8 à 10, dans lequel l'acide remis en circulation est dirigé vers le fond du condenseur d'acide sulfurique.

13. Procédé selon l'une quelconque des revendications 1 à 5, dans lequel le milieu d'extraction est chauffé par chauffage électrique ou par échange de chaleur indirect avec de la vapeur saturée ou surchauffée, du gaz de procédé, du sel fondu de transfert de chaleur, de l'huile de transfert de chaleur ou toute combinaison de ceux-ci.

14. Boucle de recirculation d'acide pour mettre en œuvre le procédé selon l'une quelconque des revendications 1 à 13, ladite boucle comprenant:
- une pompe à acide (49) alimentée en acide sulfurique concentré chaud (48) à partir de la sortie d'une colonne de concentrateur d'acide sulfurique (55) et éventuellement l'effluent du condenseur d'acide sulfurique (47),
- une chaudière d'acide (53), dans laquelle une fraction de l'acide provenant de la sortie de la colonne (56) est chauffée à une température de 200 à 270 °C,
- un tuyau (54) dirigeant l'acide chauffé vers l'entrée de la colonne de concentrateur (55) ou vers le fond du condenseur d'acide sulfurique (11), et
- un réservoir d'acide situé en amont de la pompe à acide (49), soit intégré dans la colonne du concentrateur, soit en tant que réservoir ou cuve séparé.

15. Boucle de recirculation d'acide pour mettre en œuvre le procédé selon l'une quelconque des revendications 1 à 5 et 8 à 13, ladite boucle comprenant:
- une pompe à acide (49) alimentée en acide sulfurique concentré chaud (48) à partir de la sortie d'une colonne de concentrateur d'acide sulfurique (55) et éventuellement l'effluent du condenseur d'acide sulfurique (47),
- un tuyau (54) dirigeant l'acide remis en circulation vers l'entrée de la colonne de concentrateur (55) ou vers le fond du condenseur d'acide sulfurique (11), et
- un réservoir d'acide situé en amont de la pompe à acide (49), soit intégré dans la colonne de concentrateur (55), soit en tant que réservoir ou cuve séparé.

16. Colonne de concentrateur d'acide sulfurique autonome améliorée pour une utilisation dans le procédé selon l'une quelconque des revendications 1 à 13, ladite colonne étant reliée à
- un refroidisseur d'acide produit (58) pour préchauffer un courant d'alimentation d'acide sulfurique froid (57) par échange de chaleur avec un courant de produit d'acide sulfurique concentré chaud (51),
- une pompe à acide (49) alimentée en acide sulfurique concentré chaud (48) à partir de la sortie d'une colonne de concentrateur (55),
- un réservoir d'acide situé en amont de la pompe à acide (49), soit intégré dans la colonne de concentrateur, soit en tant que réservoir ou cuve séparé, et éventuellement
- une chaudière d'acide de recyclage (53), dans laquelle la charge d'acide préchauffé (60), mélangée à l'acide produit recyclé (52), est chauffée à 200 à 270 °C avant d'être alimentée à l'entrée de la colonne de concentrateur (55) ou au fond du condenseur d'acide sulfurique (11).

17. Colonne de concentrateur d'acide sulfurique selon la revendication 16, dans laquelle la charge d'acide chaud (54) est combinée avec de l'acide sulfurique provenant d'un condenseur d'acide sulfurique (11) et mise en contact avec le milieu d'extraction (45) circulant à contre-courant, augmentant ainsi la concentration en acide sulfurique dans la phase liquide.
